# EUROPEAN PATENT APPLICATION

(11) **EP 3 832 480 A2**
(43) Date of publication of application: **09.06.2021**
(21) Application number: 21164629.4
(22) Date of filing: 24.03.2021
(51) Int. Cl.: G06F 16/22, G06F 16/25

(54) **DATA PROCESSING METHOD, APPARATUS, DEVICE AND STORAGE MEDIUM**

(30) Priority: 09.05.2020 CN 202010388439
(71) Applicant: BEIJING BAIDU NETCOM SCIENCE AND TECHNOLOGY CO. LTD., 100085 Beijing (CN)
(72) Inventor: YU, Tao, Haidian Distric, Beijing 100085 (CN); WU, Mingyu, Haidian District,, Beijing 100085 (CN); YE, Jun, Haidian District, Beijing 100085 (CN)
(74) Representative: Zimmermann, Tankred Klaus

(57) **Abstract**

Embodiments of the disclosure provide a data processing method, a data processing apparatus, an electronic device and a storage medium. The method includes: obtaining a target field and a target identifier from a data operation request of a user; determining a storage location of target data in a data table based on the target field and the target identifier, in which the data table is configured to store data of at least two users; and executing an operation logic associated with the data operation request based on the determined storage location.

## Description

### TECHNICAL FIELD

Embodiments of the disclosure relates to a field of data warehouse technologies. Specifically, embodiments of the disclosure provide a data processing method, a data processing apparatus, an electronic device and a storage medium.

### BACKGROUND

With the rise of the enterprise-level software-as-a-service (SaaS) market, more and more companies choose to host data import, storage, and query on the SaaS. Due to differences in the industries and products of companies, there is a need for storing custom fields in a data table. In order to improve cost competitiveness of the SaaS platform and reduce the costs of the SaaS, data table storage technologies are required to efficiently support import of custom data from a plurality of users.

### SUMMARY

In a first aspect, the disclosure provides a data processing method. The method includes: obtaining a target field and a target identifier from a data operation request of a user; determining a storage location of target data in a data table based on the target field and the target identifier, in which the data table is configured to store data of at least two users; and executing an operation logic associated with the data operation request based on the determined storage location.

In a second aspect, the disclosure provides a data processing apparatus. The apparatus includes: a field obtaining module, a location determining module and a logic executing module. The field obtaining module is configured to obtain a target field and a target identifier from a data operation request of a user. The location determining module is configured to determine a storage location of target data in a data table based on the target field and the target identifier, in which the data table is configured to store data of at least two users. The logic executing module is configured to execute an operation logic associated with the data operation request based on the determined storage location.

In a third aspect, the disclosure provides an electronic device. The electronic device includes: at least one processor and a memory communicatively connected with the at least one processor. The memory stores instructions executable by the at least one processor, and when the instructions are executed by the at least one processor, the at least one processor is caused to implement the method according to any one of the embodiments of the disclosure.

In a fourth aspect, the disclosure provides a non-transitory computer readable storage medium storing computer instructions, and the computer instructions are used to cause the computer to implement the method according to any one of the embodiments of the disclosure.

In a fourth aspect, the disclosure provides a computer program product. When instructions in the computer program product are executed by a processor, the data processing method is implemented according to any one of the embodiments of the disclosure.

The technical solution of the embodiment of the disclosure realizes requirements on custom data fields from different users, and solves the problem of high data import cost.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a data processing method according to an embodiment of the disclosure.
FIG. 2 is a flowchart of another data processing method according to an embodiment of the disclosure.
FIG. 3 is a flowchart of another data processing method according to an embodiment of the disclosure.
FIG. 4 is a schematic diagram of data import interaction according to an embodiment of the disclosure.
FIG. 5 is a schematic diagram of data query interaction according to an embodiment of the disclosure.
FIG. 6 is a schematic diagram of multi-user data import and query interaction according to an embodiment of the disclosure.
FIG. 7 is a structural schematic diagram of a data processing apparatus according to an embodiment of the disclosure.
FIG. 8 is a block diagram of an electronic device used to implement a data processing method according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

Existing solutions may not be able to support the need for customizing data fields from the plurality of users, or data import costs of the solutions are high, so there is a need for data table storage technologies that can meet the need for customizing data fields from the plurality of users on the platform and importing efficiently the data fields.

The disclosure provides a data processing method, a data processing apparatus, an electronic device and a storage medium.

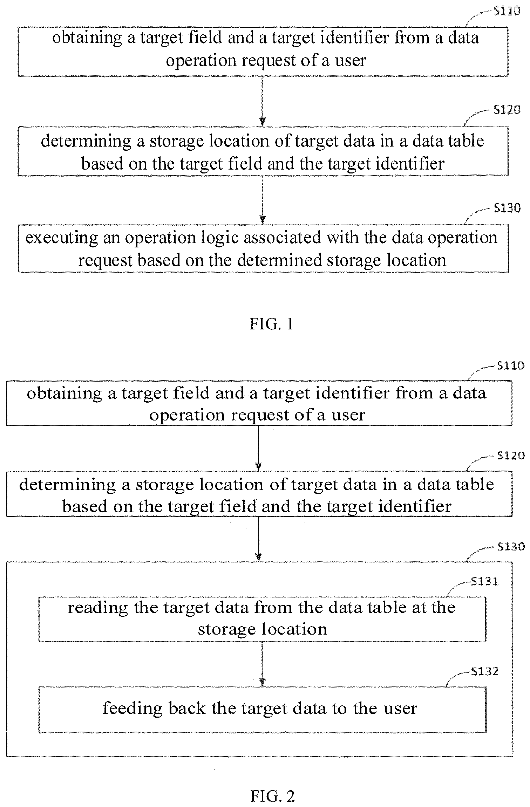

FIG. 1 is a flowchart of a data processing method according to an embodiment of the disclosure. This embodiment is applicable to a case where a user operates on a data table based on custom fields. The method is implemented by a data processing apparatus, which may be implemented in software and/or hardware. As illustrated in FIG. 1, the data processing method according to the embodiment of the disclosure includes the following steps.

At block S110, a target field and a target identifier are obtained from a data operation request of a user.

The data operation request is an operation request initiated by the user on the data table used by the user.

In detail, the operation request may be a request for a data addition operation, a data deletion operation, a data modification operation, and a data query operation on the data table.

The target field refers to a field determined by the user to identify target data.

In detail, the target field is defined by the user according to the needs.

The target identifier is a kind of identification information configured to identify the user or project to which the target data belongs.

In detail, the target identifier may be a user identifier or a project identifier, which is not limited in this embodiment.

At block S120, a storage location of target data in a data table is determined based on the target field and the target identifier.

The data table is configured to store data of at least two users.

In detail, the data table is commonly used by a plurality of users, that is, a shared data table.

The target data refers to data requested by the user for processing.

As illustrated in Table 1, two dimensions in the data table are a custom field set and the data identifier.

**Table 1**

| | Custom field set 1 | Custom field set 2 | ...... |
|---|---|---|---|
| Data identifier 1 | Data 1 | Data 2 | Data 3 |
| ...... | Data 4 | Data 5 | Data 6 |

Correspondingly, determining the storage location of target data in the data table based on the target field and the target identifier includes: matching the target field with fields in a custom field set in the data table, and matching the target identifier with the data identifier to obtain a matching result; and determining a column and a row of the target data based on the matching result.

At block S130, an operation logic associated with the data operation request is executed based on the determined storage location.

Optionally, in response to determining that the data operation request is a data modification request, the operation logic associated with the data operation request is to modify the target data.

Correspondingly, modifying the target data based on the determined storage location includes: deleting the target data at the storage location, and writing new data into the data table at the storage location.

In response to determining that the data operation request is a data deletion request, the operation logic associated with the data operation request is to delete the target data.

Correspondingly, deleting the target data based on the determined storage location includes: positioning the target data based on the determined storage location, and deleting the target data.

In the technical solution of the embodiment of the disclosure, the storage location of the target data in the data table is determined through custom fields, so as to realize the need for customizing data fields by the user.

In addition, the user data is stored in a shared data table storing data of at least two users, so that operation tasks on the data table by the plurality of users may be merged, which significantly reduces operation scheduling and management costs, make operation costs not increase linearly with users, and solves the problem of high operation costs. If one data table is allocated to each user, a plurality of parallel threads need to be started for different data tables at the same time in a scenario where a plurality of users continuously operate on the data tables, which leads to the problem of high operating costs. However, in this solution, one data table is shared by the plurality of users, and only one thread needs to be started, which realizes responses to operation requests initiated by the plurality of users.

Further, in response to determining that the data operation request is a data import request, executing the operation logic associated with the data operation request based on the determined storage location includes: writing the target data into the data table at the storage location.

Based on this technical feature, the embodiment of the disclosure write the target data into the data table at the storage location, which realizes a response to the data import request initiated by the user.

FIG. 2 is a flowchart of another data processing method according to an embodiment of the disclosure. On the basis of the above method, it takes as an example that the data operation request is a data query request, and this method specifically optimizes S130. As illustrated in FIG. 2, the specific optimization of S130 includes the following steps.

At block S131, the target data is read from the data table at the storage location.

At block S132, the target data is fed back to the user.

In detail, only target data may be fed back to the user.

The specific feedback may be in a form of displaying the target data to the user, or in a form of sending the target data to the user.

In this embodiment of the disclosure, the target data is read from the data table at the storage location, and the target data is fed back to the user, thereby realizing a response to the data query request initiated by the user.

To facilitate users' understanding of the target data, feeding back the target data to the user includes: associating the target data with the target field; and feeding back the associated target data and target field to the user.

In detail, based on a mapping relation between the target data and the target field, the target data is associated with the target field.

Based on this technical feature, this embodiment of the disclosure feeds back the associated target data and the target field to the user by associating the target data with the target field, so that the user could easily understand the target data based on the target fields.

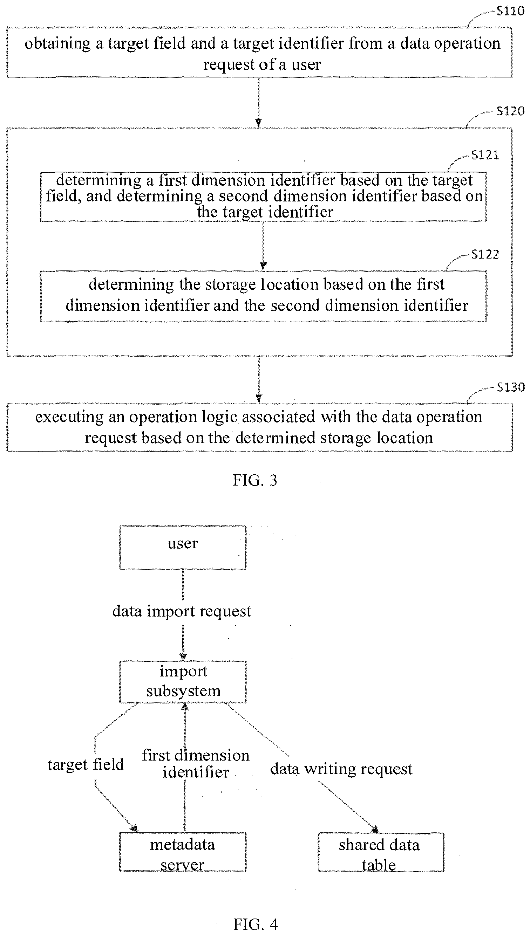

FIG. 3 is a flowchart of another data processing method according to an embodiment of the disclosure. On the basis of the above method, this method specifically optimizes S120. As illustrated in FIG. 3, specific optimization of S120 includes the following steps.

At block S121, a first dimension identifier is determined based on the target field, and a second dimension identifier is determined based on the target identifier.

The first dimension identifier is configured to identify one dimension in the data table. The second dimension identifier is configured to identify the other dimension in the data table.

In detail, the first dimension identifier may be a row identifier or a column identifier of the data table. Correspondingly, the second dimension identifier may be the column identifier or the row identifier of the data table.

In detail, determining the first dimension identifier based on the target field includes: obtaining the first dimension identifier corresponding to the target field based on a mapping relation between the target field and the first dimension identifier.

To establish the mapping relation between the target field and the first dimension identifier, before obtaining the first dimension identifier corresponding to the target field based on the mapping relation between the target field and the first dimension identifier, the method further includes: obtaining the target field and a data type of the target data; selecting at least one idle dimension identifier from idle dimension identifiers of the data table as the first dimension identifier based on the data type; and establishing the mapping relation between the target field and the first dimension identifier.

The idle dimension identifier refers to an identifier of a dimension for which no data is written in the data table.

In detail, the data type may be a numeric type and a string type.

At block S122, the storage location is determined based on the first dimension identifier and the second dimension identifier.

In detail, determining the storage location based on the first dimension identifier and the second dimension identifier includes: determining a target column based on the first dimension identifier; determining a target row based on the second dimension identifier; and determining the storage location based on the target column and the target row.

The target row refers to the row where the target data is located, and the target column refers to the column where the target data is located.

In detail, referring to Table 2, the data table of the embodiment of the disclosure may also include a first dimension identifier and a second dimension identifier.

**Table 2**

| | First dimension identifier 1 | First dimension identifier 2 | ...... |
|---|---|---|---|
| Second dimension identifier 1 | Data 1 | Data 2 | Data 5 |
| ...... | Data 3 | Data 4 | Data 6 |

In practical applications, the embodiments of this disclosure are described as follows.

As illustrated in FIG. 4, taking as an example that the data operation request is a data import request, the data processing method in this embodiment of the disclosure includes: receiving a data import request from a user; sending the target field in the data import request to a metadata server, and receiving a first dimension identifier returned by the metadata server; determining a second dimension identifier based on the target identifier, and determining the storage location of the target data in the data table based on the first dimension identifier and the second dimension identifier; and writing the target data into the data table, wherein the data table is a shared data table commonly used by a plurality of users.

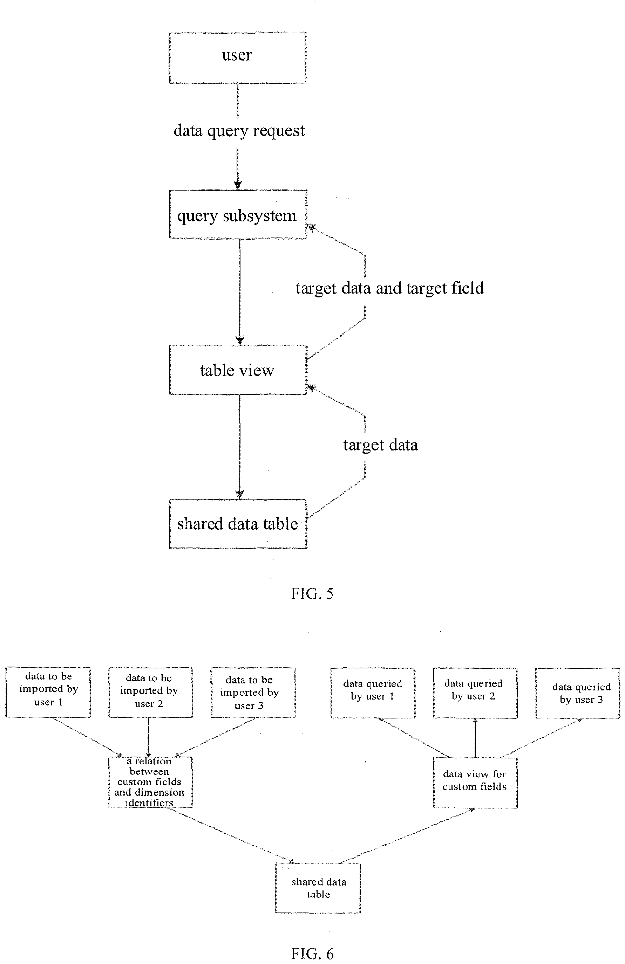

As illustrated in FIG. 5, taking as an example that the data operation request is a data query request, the data processing method in the embodiment of the disclosure includes: receiving a data query request sent by a user; determining a first dimension identifier based on the target field in the data query request according to a table view; determining a second dimension identifier based on the target identifier in the data query request; determining the storage location of the target data in the data table based on the first dimension identifier and the second dimension identifier; reading the target data at the storage location, and displaying the target data to the user in association with the target field.

As illustrated in FIG. 6, based on the above import and query logic, custom data operations from the plurality of users may be realized based on shared data tables.

In the technical solution of the embodiments of the disclosure, the first dimension identifier is determined based on the target field, and the second dimension identifier is determined based on the target identifier. The storage location is determined based on the first dimension identifier and the second dimension identifier, so as to avoid occupation of data table storage resources by the custom field sets.

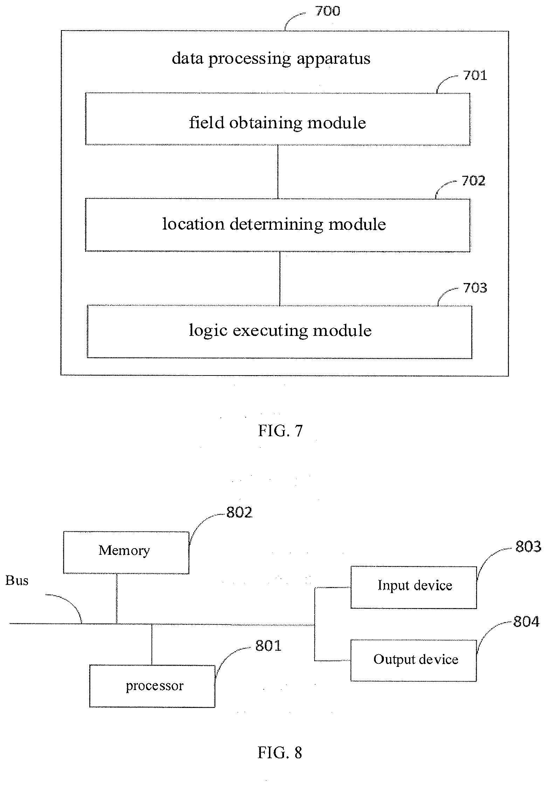

FIG. 7 is a structural schematic diagram of a data processing apparatus according to an embodiment of the disclosure. As illustrated in FIG. 7, the data processing apparatus 700 includes: a field obtaining module 701, a location determining module 702 and a logic executing module 703.

The field obtaining module 701 is configured to obtain a target field and a target identifier from a data operation request of a user. The location determining module 702 is configured to determine a storage location of target data in a data table based on the target field and the target identifier, in which the data table is configured to store data of at least two users. The logic executing module 703 is configured to execute an operation logic associated with the data operation request based on the determined storage location.

In the technical solution of the embodiment of the disclosure, the storage location of the target data in the data table is determined based on custom fields, so as to realize needs for customizing data field by the user.

In addition, the user data is stored in a shared data table storing data of at least two users, so that operation tasks on the data table by the plurality of users may be merged, which significantly reduces operation scheduling and management costs, make operation costs not increase linearly with users, and solves the problem of high operation costs. If one data table is allocated to each user, a plurality of parallel threads need to be started for different data tables at the same time in a scenario where a plurality of users continuously operate on the data tables, which leads to the problem of high operating costs. However, in this solution, on data table is shared by different users, and only one thread needs to be started, which realizes responses to operation requests initiated by the plurality of users.

In response to determining that the data operation request is a data query request, the logic executing module includes: a data reading unit and a data feedback unit. The data reading unit is configured to read the target data from the data table at the storage location. The data feedback unit is configured to feedback the target data to the user.

The data feedback unit includes: a field associating sub-unit and a data feedback sub-unit. The field associating sub-unit is configured to associate the target data with the target field. The data feedback sub-unit is configured to feedback the associated target data and target field to the user.

In response to determining that the data operation request is a data import request, the logic executing module includes: a data writing unit, configured to write the target data into the data table at the storage location.

The location determining module includes: an identifier determining unit and a location determining unit. The identifier determining unit is configured to determine a first dimension identifier based on the target field, and determine a second dimension identifier based on the target identifier. The location determining unit is configured to determine the storage location based on the first dimension identifier and the second dimension identifier.

The identifier determining unit includes: an identifier determining sub-unit, configured to obtain the first dimension identifier corresponding to the target field based on a mapping relation between the target field and the first dimension identifier.

The apparatus further includes: a field obtaining module, an identifier determining module and a relation establishing module.

The field obtaining module is configured to obtain the target field and a data type of the target data before obtaining the first dimension identifier corresponding to the target field based on the mapping relation between the target field and the first dimension identifier.

The identifier determining module is configured to select at least one idle dimension identifier from idle dimension identifiers of the data table as the first dimension identifier based on the data type.

The relation establishing module is configured to establish the mapping relation between the target field and the first dimension identifier.

The location determining unit includes: a column determining sub-unit, a row determining sub-unit and a location determining sub-unit.

The column determining sub-unit is configured to determine a target column based on the first dimension identifier.

The row determining sub-unit is configured to determine a target row based on the second dimension identifier.

The location determining sub-unit is configured to determine the storage location based on the target column and the target row.

According to the embodiments of the disclosure, the disclosure also provides an electronic device and a readable storage medium.

FIG. 8 is a block diagram of an electronic device used to implement the data processing method according to an embodiment of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the electronic device includes: one or more processors 801, a memory 802, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 801 is taken as an example in FIG. 8.

The memory 802 is a non-transitory computer-readable storage medium according to the disclosure. The memory stores instructions executable by at least one processor, so that the at least one processor executes the data processing method according to the disclosure. The non-transitory computer-readable storage medium of the disclosure stores computer instructions, which are used to cause a computer to execute the data processing method according to the disclosure.

As a non-transitory computer-readable storage medium, the memory 802 is configured to store non-transitory software programs, non-transitory computer executable programs and modules, such as program instructions/modules (for example, the field obtaining module 701, location determining module 702, and logic executing module 703 shown in FIG. 7) corresponding to the method in the embodiment of the disclosure. The processor 801 executes various functional applications and data processing of the server by running non-transitory software programs, instructions, and modules stored in the memory 802, that is, implementing the data processing method in the foregoing method embodiments.

The memory 802 may include a storage program area and a storage data area, where the storage program area may store an operating system and application programs required for at least one function. The storage data area may store data created according to the use of the electronic device for implementing the method. In addition, the memory 802 may include a high-speed random access memory, and a non-transitory memory, such as at least one magnetic disk storage device, a flash memory device, or other non-transitory solid-state storage device. In some embodiments, the memory 802 may optionally include a memory remotely disposed with respect to the processor 801, and these remote memories may be connected to the electronic device for implementing the method through a network. Examples of the above network include, but are not limited to, the Internet, an intranet, a local area network, a mobile communication network, and combinations thereof.

The electronic device for implementing the method may further include: an input device 803 and an output device 804. The processor 801, the memory 802, the input device 803, and the output device 804 may be connected through a bus or in other manners. In FIG. 8, the connection through the bus is taken as an example.

The input device 803 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 804 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server mapping relation is generated by computer programs running on the respective computers and having a client-server relation with each other.

The technical solutions of the embodiments of the disclosure realize the need for customizing data fields by a plurality of users, and solve the problem of high data import costs.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of this application shall be included in the protection scope of this application.

## Claims

1. A data processing method, comprising:
obtaining (SI 10) a target field and a target identifier from a data operation request of a user;
determining (S120) a storage location of target data in a data table based on the target field and the target identifier, in which the data table is configured to store data of at least two users; and
executing (S130) an operation logic associated with the data operation request based on the determined storage location.

2. The method of claim 1, wherein executing the operation logic associated with the data operation request based on the determined storage location in response to determining that the data operation request is a data query request, comprises:
reading (S131) the target data from the data table at the storage location; and
feeding back (S132) the target data to the user.

3. The method of claim 1 or 2, wherein feeding back the target data to the user comprises:
associating the target data with the target field; and
feeding back the associated target data and target field to the user.

4. The method of any one of claims 1-3, wherein executing the operation logic associated with the data operation request based on the determined storage location in response to determining that the data operation request is a data import request, comprises:
writing the target data into the data table at the storage location.

5. The method of any one of claims 1-4, wherein determining the storage location of the target data in the data table based on the target field and the target identifier comprises:
determining (S121) a first dimension identifier based on the target field, and determining a second dimension identifier based on the target identifier; and
determining (S122) the storage location based on the first dimension identifier and the second dimension identifier.

6. The method of claim 5, wherein determining the first dimension identifier based on the target field comprises:
obtaining the first dimension identifier corresponding to the target field based on a mapping relation between the target field and the first dimension identifier.

7. The method of claim 6, wherein before obtaining the first dimension identifier corresponding to the target field based on the mapping relation between the target field and the first dimension identifier, the method further comprises:
obtaining the target field and a data type of the target data;
selecting at least one idle dimension identifier from idle dimension identifiers of the data table as the first dimension identifier based on the data type, in which the idle dimension identifier refers to an identifier of a dimension for which no data is written in the data table; and
establishing the mapping relation between the target field and the first dimension identifier.

8. The method of claim 5, wherein determining the storage location based on the first dimension identifier and the second dimension identifier comprises:
determining a target column based on the first dimension identifier;
determining a target row based on the second dimension identifier; and
determining the storage location based on the target column and the target row.

9. A data processing apparatus, comprising:
a field obtaining module (701), configured to obtain a target field and a target identifier from a data operation request of a tenant;
a location determining module (702), configured to determine a storage location of target data in a data table based on the target field and the target identifier, in which the data table is configured to store data of at least two tenants; and
a logic executing module (703), configured to execute an operation logic associated with the data operation request based on the determined storage location.

10. The apparatus of claim 9, wherein in response to determining that the data operation request is a data query request, the logic executing module comprises:
a data reading unit, configured to read the target data from the data table at the storage location; and
a data feedback unit, configured to feedback the target data to the tenant;
wherein the data feedback unit comprises:
a field associating sub-unit, configured to associate the target data with the target field; and
a data feedback sub-unit, configured to feedback the associated target data and target field to the tenant;
wherein in response to determining that the data operation request is a data import request, the logic executing module comprises:
a data writing unit, configured to write the target data into the data table at the storage location.

11. The apparatus of claim 9, wherein the location determining module comprises:
an identifier determining unit, configured to determine a first dimension identifier based on the target field, and determine a second dimension identifier based on the target identifier; and
a location determining unit, configured to determine the storage location based on the first dimension identifier and the second dimension identifier;
wherein the identifier determining unit comprises:
an identifier determining sub-unit, configured to obtain the first dimension identifier corresponding to the target field based on a mapping relation between the target field and the first dimension identifier;
wherein the location determining unit comprises:
a column determining sub-unit, configured to determine a target column based on the first dimension identifier;
a row determining sub-unit, configured to determine a target row based on the second dimension identifier; and
a location determining sub-unit, configured to determine the storage location based on the target column and the target row.

12. The apparatus of claim 11, further comprising:
a field obtaining module, configured to obtain the target field and a data type of the target data before obtaining the first dimension identifier corresponding to the target field based on the mapping relation between the target field and the first dimension identifier;
an identifier determining module, configured to select at least one idle dimension identifier from idle dimension identifiers of the data table as the first dimension identifier based on the data type; and
a relation establishing module, configured to establish the mapping relation between the target field and the first dimension identifier.

13. An electronic device, comprising:
at least one processor; and
a memory communicatively connected with the at least one processor; wherein,
the memory stores instructions executable by the at least one processor, and when the instructions are executed by the at least one processor, the at least one processor is caused to implement the method according to any one of claims 1-8.

14. A non-transitory computer readable storage medium storing computer instructions, wherein the computer instructions are used to cause the computer to implement the method according to any one of claims 1-8.

15. A computer program product, wherein when instructions in the computer program product are executed by a processor, the data processing method of any one of claims 1-8 is implemented.
